# FASCICULE DE BREVET EUROPEEN

(11) **EP 2 338 109 B1**
(45) Date de publication et mention de la délivrance du brevet: **17.01.2018**
(21) Numéro de dépôt: 09743885.7
(22) Date de dépôt: 16.10.2009
(51) Int. Cl.: G06F 9/48, G06F 9/38, G06F 9/50

(54) **PROCEDE D'EXECUTION DETERMINISTE ET DE SYNCHRONISATION D'UN SYSTEME DE TRAITEMENT DE L'INFORMATION COMPORTANT PLUSIEURS COEURS DE TRAITEMENT EXECUTANT DES TACHES SYSTEMES**
VERFAHREN ZUR DETERMINISTISCHEN AUSFÜHRUNG UND SYNCHRONISATION EINES INFORMATIONSVERARBEITUNGSSYSTEMS MIT MEHREREN VERARBEITUNGSKERNEN, DIE SYSTEMAUFGABEN AUSFÜHREN
METHOD FOR THE DETERMINISTIC EXECUTION AND SYNCHRONISATION OF AN INFORMATION PROCESSING SYSTEM COMPRISING A PLURALITY OF PROCESSING CORES EXECUTING SYSTEM TASKS

(30) Priorité: 17.10.2008 FR 0805770
(43) Date de publication de la demande: 29.06.2011
(73) Titulaire: COMMISSARIAT À L'ÉNERGIE ATOMIQUE ET AUX ÉNERGIES ALTERNATIVES, 75015 Paris (FR)
(72) Inventeur: AUSSAGUES, Christophe, F-91400 Orsay (FR); CHABROL, Damien, F-91190 Gif Sur Yvette (FR); VINCENT, David, F-91460 Marcoussis (FR)
(74) Mandataire: Lucas, Laurent Jacques
(86) Numéro de dépôt international: PCT/EP2009/063577
(87) Numéro de publication internationale: WO 2010/043706

(56) Documents cités:
- EP-B- 1 337 919
- WO-A-2007/051935
- US-A1- 2008 244 599
- MINYEOL SEO ET AL: "An Effective Design of Master-Slave Operating System Architecture for Multiprocessor Embedded Systems", ADVANCES IN COMPUTER SYSTEMS ARCHITECTURE; [LECTURE NOTES IN COMPUTER SCIENCE], SPRINGER BERLIN HEIDELBERG, BERLIN, HEIDELBERG, vol. 4697, 23 août 2007 (2007-08-23), pages 114-125, XP019067482, ISBN: 978-3-540-74308-8
- CHABROL D ET AL: "A spatial and temporal partitioning approach for dependable automotive systems", EMERGING TECHNOLOGIES&FACTORY AUTOMATION, 2009. ETFA 2009. IEEE CONFERENCE ON, IEEE, PISCATAWAY, NJ, USA, 22 septembre 2009 (2009-09-22), pages 1-8, XP031575697, ISBN: 978-1-4244-2727-7
- NOLLET V ET AL: "Designing an operating system for a heterogeneous reconfigurable SoC", PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 avril 2003 (2003-04-22), pages 174-180, XP010645749, ISBN: 978-0-7695-1926-5
- VINCENT NOLLET ET AL: "A Quick Safari Through the MPSoC Run-Time Management Jungle", EMBEDDED SYSTEMS FOR REAL-TIME MULTIMEDIA, 2007. ESTIMEDIA 2007. IEEE/ ACM/IFIP WORKSHOP ON, IEEE, PI, 1 octobre 2007 (2007-10-01), pages 41-46, XP031157010, ISBN: 978-1-4244-1654-7
- KIRSCH C M ET AL: "A Programmable Microkernel for RealTime Systems", PROCEEDINGS OF THE FIRST ACM/USENIX INTERNATIONAL CONFERENCE ON VIRTUAL EXECUTION ENVIRONMENTS. VEE'05,, 11 juin 2005 (2005-06-11), pages 35-45, XP007902001, ISBN: 978-1-59593-047-7

## Description

La présente invention concerne un procédé d'exécution déterministe et de synchronisation d'un système de traitement de l'information comportant plusieurs coeurs de traitement exécutant des tâches systèmes. Elle s'applique notamment dans le domaine de la microélectronique ou dans le domaine des systèmes électroniques embarqués à forte puissance de calcul.

L'industrie des semi-conducteurs se trouve devant un constat décevant : il n'y a plus de pistes crédibles pour augmenter de façon significative les performances des processeurs, en tout cas pas au niveau individuel. Seuls les systèmes utilisant plusieurs processeurs fonctionnant en parallèle semblent encore constituer une piste encourageante pour augmenter la puissance de calcul des systèmes. En effet, des études menées dans les années 1960 ont montré que le rapport entre la puissance de calcul et l'efficacité des systèmes de calculs est potentiellement beaucoup plus élevée pour les systèmes parallèles que pour les systèmes séquentiels. Or, les nouvelles applications dans les domaines tels que le multimédia, la communication, ou les systèmes de traitement temps-réels exigent de plus en plus de puissance de calcul pour des puissances consommées et des surfaces maîtrisées. Faute de pouvoir augmenter les puissances de traitement d'un unique coeur, la seule solution consiste à multiplier le nombre de coeurs et de les faire fonctionner en parallèle, donnant lieu à un nouveau concept architectural, celui de système parallèle sur puce. Dans le cadre assez spécialisé des processeurs pour les systèmes embarqués, cette tendance à l'augmentation du nombre de coeurs d'exécution sur une même puce est très marquée. Elle devrait tendre à moyen terme à l'introduction voire la banalisation des systèmes avec plusieurs dizaines voire centaines de coeurs d'exécution. Parmi ces systèmes peuvent être cités les systèmes multiprocesseurs sur puce, usuellement désignés par l'acronyme anglo-saxon « MPSoC » signifiant « Multi-Processsor System on Chip ».

Cependant, les systèmes parallèles sont beaucoup plus difficiles à programmer et à mettre au point que les systèmes séquentiels. Ces difficultés de programmation et de mise au point sont exacerbées par la complexité toujours croissante des applications. Dans les applications embarquées, ces difficultés sont également accrues par la volonté d'intégrer toujours plus de fonctionnalités et par l'accroissement permanent des volumes de données à traiter. Par exemple, les téléphones mobiles associent des fonctions de télécommunication avec des fonctions multimédias, de positionnement, ou encore des jeux. Cela conduit à des systèmes embarqués où des tâches de calculs intensifs côtoient des tâches dominées par le contrôle, avec des interactions très fortes entre ces différents éléments des applications. La synchronisation des traitements des différents coeurs pour gérer au mieux le parallélisme effectif est alors le facteur crucial de performance et de capacité à répondre aux contraintes temps-réel associées. C'est la principale difficulté à l'exploitation efficace des architectures parallèles des systèmes embarqués. Il faut aborder cette difficulté sous le triple aspect de la maîtrise de l'indéterminisme, de la maîtrise des communications et de la maîtrise des contrôles. Une fois qu'un parallélisme potentiel a été identifié, extrait d'une application et exprimé dans un programme, il faut ensuite être capable de mettre en oeuvre effectivement ce parallélisme dans une architecture matérielle donnée. Dans un MPSoC par exemple, afin de tirer le meilleur profit du travail d'extraction du parallélisme applicatif fait par le programmeur, les nombreuses séquences de traitements doivent se répartir au mieux l'ensemble des ressources de la puce, alors que ces séquences sont liées entre elles par des dépendances de données ou de contrôle d'exécution. Par la suite, ces séquences seront appelées "tâches d'exécution" : une tâche d'exécution concerne l'exécution d'un traitement sur un coeur de traitement. On peut noter que les spécialistes du logiciel l'appellent aussi « fil d'exécution » ou « thread ». Nous ne ferons pas de distinction dans le reste de la présente demande, le terme « tâche » fera seul référence à une tâche d'exécution. Afin d'organiser l'exécution de ces tâches sur un MPSoC et de faciliter le travail du développeur, le support logiciel de leur exécution est structurée en des parties purement applicatives et d'autres dites "systèmes" dont le rôle est d'abstraire les ressources du matériel sous-jacent. Pour mieux exploiter le parallélisme exprimé par les tâches et celui disponible dans le MPSoC, il est nécessaire de mener une réflexion portant d'une part sur la façon de choisir les traitements à effectuer sur les différents coeurs et d'autre part sur la façon de les faire fonctionner ensemble, i.e. sur la manière de structurer le logiciel de base contrôlant l'exécution des tâches sur le matériel. Ainsi, de la même manière que le programme exprime le potentiel de parallélisme de l'application, il faut trouver un moyen d'exprimer le potentiel de parallélisme de l'architecture par un contrôle approprié des tâches au niveau du logiciel de base, généralement appelé "noyau". La réflexion doit prendre en compte toutes les situations qui peuvent nuire à une bonne utilisation du parallélisme potentiel de l'architecture. Il s'agit d'abord des risques d'être limité par l'accès à une ressource partagée essentielle comme la mémoire centrale, un réseau, un bus de communication ou un gestionnaire de tâches. Il s'agit également des risques de ne pas pouvoir gérer de façon suffisamment fine les interdépendances entre les tâches, notamment lorsque celles-ci ont un caractère dynamique. Il s'agit enfin des risques de ne pas pouvoir maîtriser les indéterminismes de l'exécution parallèle, rendant complexe et délicate la mise au point des programmes. Une façon standard d'adresser ce problème est une approche logicielle en couches où sont distinguées *a minima* la couche applicative incorporant les tâches à exécuter et le noyau qui abstrait les ressources matérielles et gère l'exécution effective des tâches sur la machine. Le noyau est lui-même classiquement structuré en deux parties dont une appelée "micro-noyau", qui réalise toutes les fonctions systèmes en relation directe avec le matériel comme la gestion des registres, des timers, des périphériques, etc, et une seconde appelée dans ce document "couche système" en charge des communications inter-tâches et d'autres aspects haut-niveau de contrôles des tâches. La réflexion doit aboutir à une structuration du noyau qui définit la façon de choisir les coeurs de traitement et la façon de les faire fonctionner de manière coordonnée et efficace. Cela constitue l'un des défis majeurs auquel l'industrie microélectronique et des logiciels embarqués ait à faire face actuellement et auquel la présente invention apporte une solution.

Une solution existante propose d'utiliser les coeurs de traitement de manière symétrique pour exécuter le noyau. Elle est mise en oeuvre dans les architectures de type « Symmetric MultiProcessing » (SMP). Par exemple, il peut s'agir d'avoir un noyau identique du type Linux ou Windows (Marque Déposée) exécuté sur chacun des coeurs de traitement distincts. Cependant, un inconvénient majeur est qu'un noyau du type Linux ou Windows (Marque Déposée) ne peut pas s'exécuter sur deux coeurs distincts de manière réellement simultanée, au moins en ce qui concerne les fonctions critiques du noyau. Le parallèlisme est donc limité aux fonctions non critiques du noyau. Il s'agit là de l'un des problèmes techniques que la présente invention se propose de résoudre en répartissant une partie des fonctions critiques du noyau sur plusieurs coeurs de traitement.

Il existe également des solutions dites de « partition », qui proposent que chaque coeur de traitement soit dédié à des activités qui s'ignorent mutuellement. Des échanges ont alors lieu par le biais du partage d'un espace mémoire. Par exemple, la demande de brevet No WO/2007/038011 de titre « Real-time threading service for paritioned multiprocessor systems» décrit comment un coeur peut être dédié à l'exécution de tâches temps-réel fournissant des résultats pour une application exécutée grâce à un noyau non temps-réel exécuté sur un autre coeur. De même, il existe des solutions où chaque coeur exécute un noyau qui le rend dédié à certains types de traitements (calculs logiques, calculs intensifs, prise d'interruptions des entrées/sorties avec le réseau, etc). Un exemple typique est d'avoir un coeur dédié aux calculs et l'autres aux prises d'interruptions pour servir les entrées/sorties périphériques. Dans ce cas typique, le noyau du coeur de calcul permet d'effectuer les calculs sur des données asynchrones provenant des entrées/sorties mises à disposition par le coeur où sont gérées les prises d'interruption. Une interruption correspond à l'occurrence d'un événement externe au programme, ledit évènement déclenchant l'arrêt temporaire de l'exécution d'une tâche en cours afin d'exécuter une autre tâche plus prioritaire (ce changement de contexte d'exécution est appelé commutation). L'événement externe peut être l'avancement d'une horloge réelle ou simulée, la tâche plus prioritaire pouvant être déclenchée par un temporisateur. C'est notamment le cas des tâches temps-réel qui sont contraintes dans le temps ou « Time Triggered » (TT) : dans la mesure où une tâche temps-réel doit être terminée avant une date donnée, elles doit aussi être commencée avant une date donnée qui dépend de la durée d'exécution de la tâche. Les tâches temps-réel sont déclenchées par un temporisateur physiquement cadencé par un quartz, formant ainsi une horloge réelle. L'événement externe peut également être la complétion d'un transfert de données, la tâche plus prioritaire est alors dite « Event Triggered » (ET) sous interruption d'entrées-sorties. Dans ce type de conception relativement classique, le coeur de prise d'interruption et le coeur de calcul sont faiblement couplés. Ce type de solution se rapproche alors des architectures avec co-processeurs dont la coordination repose sur la mise à disposition de données et de levées de signaux associés. Un avantage de cette solution est d'offrir une bonne réactivité aux entrées/sorties rapides, c'est-à-dire qu'elle permet de faire les calculs élémentaires associés sans pour autant perturber l'ordonnancement des traitements sur le coeur de calcul. Elle est efficace lorsque les tâches à exécuter sont indépendantes les unes des autres, c'est-à-dire lorsqu'elles nécessitent peu ou pas d'échanges de données et/ou de synchronisations. Cependant, lorsque les entrées/sorties nécessitent des synchronisations fortes avec les calculs ou lorsqu'il existe de nombreuses entrées/sorties avec des rythmes différents, ce type de solution est peu efficace. Il s'agit là encore de l'un des problèmes techniques que la présente invention se propose de résoudre.

Une autre classe de solution existante est constituée par les architectures de noyau de type « maître-esclave » (comme celle présentée dans la demande de brevet américain No US005978838A de titre « Coordination and synchronization of an asymmetric, single-chip, dual multiprocessor »). Un coeur est désigné comme coeur « maître » et est responsable de la gestion de tous les appels systèmes et de toutes les interruptions tandis que les autres coeurs sont désignés comme coeurs « esclaves » et exécutent uniquement la partie algorithmique des tâches applicatives. Ainsi, le coeur maître prend complètement en charge le contrôle et l'allocation des traitements à réaliser par les autres coeurs esclaves : il synchronise leurs exécutions. L'avantage est la simplification des problèmes de synchronisation qui sont entièrement gérés par le processeur maître. L'inconvénient majeur de cette architecture est sa nature fortement centralisée, le processeur maître devenant sujet aux problèmes de contention engendrés lorsqu'un grand nombre de tâches voire de coeurs est concernés : les performances globales sont alors rapidement limitées par celles du processeur maître. Des améliorations ont été proposées comme celle publiée dans Advances in Computer Systems Architecture (vol. 4697) de titre «An effective design of master/slave operating system architecture for multiprocessor embedded systems» par Minyeol Seo et al. Cette publication vise à optimiser les problèmes d'ordonnancement. Ils proposent de hiérarchiser la politique d'ordonnancement sur chaque coeur, sans pour autant dégager le coeur maître du traitement de toutes les entrées/sorties ni de tous les appels systèmes, notamment ceux concernant les communications inter-tâches. Pour ce faire, ils définissent une partie du noyau appelée « Hardware Abstraction Layer » dupliquée sur chaque coeur et gérant les communications entre coeurs ("Inter-Processor Communications" ou IPC). Le mécanisme d'IPC pour synchroniser les coeurs est un mécanisme mis en oeuvre sur la base d'un appel de procédure distant ("Remote Procedure Call"). Or, ce mécanisme d'appels de fonctions distribuées client-serveur est bloquant : lorsqu'une tâche sur un coeur invoque l'envoi d'un message à l'attention d'une autre tâche, il procède à l'appel d'une fonction système distante, sur le coeur maître. Le coeur appelant est alors bloqué jusqu'au retour de l'appel de cette fonction, interdisant toute autre exécution en parallèle durant ce laps de temps. De même, si le coeur maître est bloqué pour une raison ou pour une autre, tous les coeurs esclaves se retrouvent bloqués également, et réciproquement. Une telle solution est donc encore trop centralisée. Il s'agit là encore de l'un des problèmes techniques que la présente invention se propose de résoudre.

Enfin, il existe aussi des propositions de structuration de noyau pour les processeurs mono-coeur, comme celle décrite dans le brevet EP 1 337 919 B1, qui divulguent l'organisation d'un noyau en un micro-noyau et une couche-système permettant de coordonner sur un seul coeur une exécution déterministe des tâches. Ce brevet n'indique pas comment procéder à une partition avantageuse du noyau entre différents coeurs d'une architecture MPSoC. Il s'agit là d'un but de la présente invention.

L'invention a notamment pour but d'apporter une solution aux inconvénients précités en proposant un partitionnement optimisé du micro-noyau sur les coeurs de traitement. Les fonctions systèmes sont ainsi affectées sur la base d'une répartition optimum des fonctions de cadencement et de gestion du temps, telle que chaque coeur assure seulement une partie des traitements du micro-noyau. Un coeur est alors dédié à l'exécution des tâches, tandis que le second coeur se comporte comme un contrôleur partiel du premier et un gestionnaire d'interruption. La présente invention propose de structurer le micro-noyau en deux parties distinctes et complémentaires que sont:
- une partie orientée contrôle assurant la capture des interruptions systèmes relatives à l'entretien de la base de temps et la mise à jour des listes d'ordonnancement, et,
- une partie orientée calcul relative à l'exécution des tâches cadencées par le temps. Cette partie du micro-noyau assure dès lors la commutation des tâches conformément à la politique d'ordonnancement mise en oeuvre et animée par la partie "contrôle".
Cette structuration du micro-noyau facilite la cohabitation efficace de tâches issues:
- d'un l'îlot ET (« Event Triggered ») qui regroupe les activités d'entrées-sorties déclenchées par des interruptions où sont exécutées les tâches sous interruption ;
- d'un l'îlot TT (« Time Triggered ») qui regroupe les activités cadencées par le temps où sont exécutées les tâches temps-réel.
L'îlot TT est ainsi assigné à la partie orientée calcul, tandis que la partie orientée contrôle du micro-noyau, dédiée à la prise d'interruptions système, peut également assurer la capture et le traitements des interruptions applicatives d'entrées/sorties de l'îlot ET. Cela a l'avantage de partitionner les deux îlots sur deux coeurs différents, mais également d'octroyer un maximum de ressources de calcul aux tâches issues de l'îlot TT, celles-ci ne subissant pas de commutation du fait des activations des tâches de l'îlot ET. Dans la suite du document, la partie "calcul" du micro-noyau est appelée "micro-noyau mN-TT" ou "partie mN-TT" tandis que la partie "contrôle" du micro-noyau est appellée "micro-noyau mN-ET" ou "partie mN-ET".

A cet effet, l'invention a notamment pour objet un système de traitement de l'information comportant deux coeurs de traitement. L'exécution d'une application par le système inclut l'exécution de tâches applicatives et l'exécution de tâches systèmes, le système comporte un micro-noyau exécutant les tâches systèmes qui sont en liaison directe avec des ressources matérielles dans lequel :
∘ une partie calcul mN-TT du micro-noyau sur un premier coeur A exécutant des tâches systèmes relatives à la commutation des tâches sur le coeur A, incluant la mise à jour pour chaque tâche d'un état indiquant si ladite tâche est exécutable ou pas, ledit état étant inclus dans un contexte d'exécution associé à ladite tâche et regroupant des données d'exécution de ladite tâche, ledit état pouvant prendre:
   ∘ une valeur indiquant que la tâche est prête ;
   ∘ une valeur indiquant que la tâche est au repos ;
   ∘ une valeur indiquant que la tâche est en erreur ;
∘ une partie contrôle mN-ET du micro-noyau sur un deuxième coeur O exécutant des tâches applicatives déclenchées par des interruptions d'entrées/sorties et exécutant des tâches systèmes relatives au contrôle de l'ordre d'allocation des tâches au coeur A, lesdites tâches systèmes incluant la gestion:
   ∘ d'une liste ordonnée des tâches prêtes, et/ou ;
   ∘ d'une liste ordonnée des tâches au repos, et/ou ;
   ∘ d'une liste des tâches en erreur ;
le système de traitement étant caractérisé en ce que les tâches systèmes exécutées par le coeur A relatives à la commutation des tâches incluent la mise à jour dans le contexte d'exécution de chaque tâche :
∘ d'une date limite de début d'exécution au plus tôt et/ou d'une date limite de fin d'exécution au plus tard ;
∘ d'un quota de temps d'exécution restant ;
de sorte que le coeur O ordonne les tâches dans la liste des tâches prêtes dans un ordre qui permet d'exécuter chaque tâche dans le respect de ses dates limites d'exécution et dans le respect de son quota de temps d'exécution.

Avantageusement, les tâches systèmes exécutées par la partie mN-TT du micro-noyau relatives à la commutation des tâches peuvent inclure, sur réception d'une interruption par le coeur A :
∘ le chargement du contexte d'exécution d'une tâche parmi les tâches prêtes ;
∘ le déclenchement de l'exécution de ladite tâche.

Avantageusement, sur réception d'une interruption, la partie mN-TT du micro-noyau peut charger le contexte d'exécution de la première tâche dans la liste des tâches prêtes.

Si nécessaire, il est possible de générer l'interruption avec un temporisateur implémenté par la partie mN-ET du micro-noyau. Le temporisateur peut être cadencé par une horloge à quartz, de manière à déclencher l'exécution par la partie mN-TT du micro-noyau de tâches applicatives temps-réel.

Avantageusement, chaque coeur peut exécuter les tâches systèmes relatives aux communications entre les tâches qui leurs sont propres.

Avantageusement, le système peut comporter un espace mémoire partagé et un jeu d'interruptions pour que les coeurs inter-agissent.

Dans un mode de réalisation, les coeurs peuvent être des processeurs de types différents. Les processeurs peuvent être implantés sur une puce.

L'invention a encore pour principaux avantages que la partition du micro-noyau permet de soulager le coeur de calcul de la prise en compte de traitements sous interruption d'entrées-sorties rapides et de certains traitements systèmes, évitant ainsi des changements de contexte fréquents entre les tâches de calculs et les traitements sous interruption. Mise en oeuvre sur une puce, les performances atteignables sont accrues tout en garantissait un haut niveau de sécurité entre les différents traitements d'acquisitions ou de calculs sur l'architecture matérielle multi-coeur. L'invention permet également de faire coexister efficacement des traitements de calculs cadencés par le temps et des routines associées aux entrées-sorties cadencées par les événements.

D'autres caractéristiques et avantages de l'invention apparaîtront à l'aide de la description qui suit faite en regard de dessins annexés qui représentent :
- la figure 1, par un chronogramme diagramme, une illustration d'un exemple de répartition selon l'invention des activités d'un micro-noyau sur deux coeurs de traitement ;
- la figure 2, par un diagramme de blocs fonctionnels, une illustration d'un exemple selon l'invention d'interruptions à destination de la partie mN-ET du micro-noyau ;
- la figure 3, par un diagramme de blocs fonctionnels, une illustration d'un exemple selon l'invention d'interruption logicielle venant de le partie mN-ET à destination de la partie mN-TT du micro-noyau ;
- la figure 4, par un diagramme de blocs fonctionnels, une illustration d'un exemple selon l'invention d'interruption d'entrées/sorties à destination de la partie mN-ET du micro-noyau ;
- la figure 5, par un diagramme de blocs fonctionnels, une illustration d'un exemple selon l'invention d'interruption logicielle de la partie mN-TT à destination de la partie mN-TT du micro-noyau ;
- la figure 6, par un chronogramme, une illustration d'un exemple de scénario de fonctionnement de deux coeurs en parallèle selon l'invention.

Selon l'invention, les parties mN-ET et mN-TT du micro-noyau partagent un seul ensemble de listes d'ordonnancement de tâches prêtes/au repos/en erreur, dont l'ordre au sein des listes est maintenu par la partie mN-ET et le contenu de chaque élément des listes par la partie mN-TT. Le micro-noyau mN-TT consulte directement les listes sans requérir à un ordonnancement local. Les traitements des parties mN-TT et mN-ET donnent également lieu à des interactions asynchrones via des interruptions logicielles. En effet, dès qu'une des parties a terminé un traitement système ayant modifié l'état des informations partagées, une interruption logicielle est levée à destination de l'autre partie pour le lui annoncer. La partie émettrice poursuit quant à elle son exécution, pour exécuter parallèmement des tâches restantes systèmes ou applicatives. Ainsi, lorsque la partie mN-ET modifie la liste des tâches prêtes, elle l'annonce à la partie mN-TT, puis elle poursuit son exécution. Inversement, la partie mN-TT annonce à la partie mN-ET le changement d'état d'une tâche, ce qui requiert une mise à jour des listes, puis elle poursuit son exécution en donnant immédiatement la main à la tâche prête suivante. Le micro-noyau est ainsi réparti dans son ensemble avec un procédé d'interactions asynchrones inexistant à ce jour.

Dans le présent exemple de réalisation, la partie mN-TT peut être hébergée sur un coeur A, appelé également coeur mN-TT, offrant un maximum de capacités de calcul. Tandis que la partie mN-ET peut être placée sur un coeur O, appelé également coeur mN-ET, pouvant être optimisé pour la prise d'interruptions. Par exemple, l'architecture Freescale S12XE (Marque Déposée) se prête bien à cette répartition, la partie mN-TT étant placé sur le coeur CISC et la partie mN-ET sur le coeur RISC. Ainsi, les tâches applicatives peuvent s'exécuter à la fois en mode utilisateur (correspondant aux traitements applicatifs ou fonctionnel du système) et en mode superviseur (correspondant aux traitements systèmes dédiés à la tâche comprenant le contrôle de son évolution logique et temporelle, ainsi que la gestion de ses communications inter-tâches). Les appels systèmes sont ainsi maintenus sur le coeur qui exécute la tâche applicative. L'invention permet la mise en oeuvre de communications entre les tâches ET et TT sans requérir à des mécanismes de synchronisation bloquants.

Comme indiqué, la présente demande décrit un système de traitement de l'information qui permet d'exécuter efficacement, c'est-à-dire de manière sécurisée et déterministe, plusieurs tâches cadencées par le temps ainsi que des traitements spécifiques liés à des entrées/sorties rapides. L'invention s'appuie sur une répartition efficace des différentes fonctions de bas-niveau du noyau sur le coeur A et le coeur O. Pour définir cette répartition efficace selon l'invention, ont également été distinguées deux parties distinctes au sein du noyau dans le présent exemple de réalisation :
- une couche système qui peut être une couche générique de gestion du cadencement par un temporisateur et des communications entre les tâches : elle contient alors la description du cadencement par le temporisateur de l'exécution des tâches, elle peut permettre en outre de mettre en oeuvre les communications entre les tâches ;
- un micro-noyau qui est une couche gérant l'allocation de la ressource de traitement, la gestion des exceptions et la datation temps-réel.
Par exemple, le temporisateur peut être cadencé par une horloge à quartz, de manière à déclencher l'exécution par le coeur A de tâches temps-réel. Le coeur A est dédié à l'exécution des tâches temps-réel de l'îlot TT, mais il implémente également les fonctions de la partie mN-TT du micro-noyau. Le coeur O est dédié à l'exécution des traitements sous interruption de l'îlot ET, mais il implémente également les fonctions de la partie mN-ET du micro-noyau relatives au contrôle de l'ordre d'allocation des traitements au coeur de calcul. La partie mN-ET du micro-noyau déclenche également dans la partie mN-TT des fonctions du micro-noyau relatives à la surveillance des temps d'allocation. Il s'agit là de l'un des principes essentiels de l'invention, à savoir l'utilisation du coeur O pour déterminer et surveiller la manière avec laquelle le coeur A est utilisé par les tâches temps-réel d'une application. L'invention permet de gagner en performance, en soulageant le coeur A des activités systèmes liées à la mise à jour des listes de tâches (tâches prêtes, tâches au repos et tâches en erreur) dans le présent exemple de réalisation, ainsi qu'en le soulageant des activités systèmes liées au choix d'allocation du coeur de calcul parmi les tâches prêtes. L'invention permet de répartir sur les deux coeurs les activités systèmes qui mettent en oeuvre l'allocation des tâches de manière non bloquante.

Dans le présent exemple de réalisation, la partie mN-TT du micro-noyau sur le coeur A est chargée de la gestion des commutations de tâches sur le coeur A. Il peut notamment s'agir de mettre à jour le contenu des contextes d'exécution des tâches, par exemple en termes de temps d'exécution effectif et de quota restant (un quota est un majorant de temps d'exécution reservé pour l'exécution de la tâche en question). Il peut également s'agir de déclencher l'exécution des tâches sur interruption du coeur O gérant le temporisateur, par exemple grâce à des dates de début au plus tôt et à des échéances connues à la compilation. Lorsqu'une telle tâche arrive à la fin de son traitement applicatif, elle passe la main au micro-noyau mN-TT sur le coeur A grâce à une interruption dite « logicielle », soit pour repousser son échéance au plus tard soit pour ajuster sa prochaine date de réveil.

Dans le présent exemple de réalisation, la partie mN-ET du micro-noyau est avantageusement chargée de prendre en compte les mises à jour des contextes de tâches et d'ordonner en conséquence les listes de tâches suivantes : une liste des tâches prêtes, une liste des tâches au repos et une liste des tâches en erreur. Ainsi, la partie mN-TT du micro-noyau peut avantageusement accorder son CPU (« Central Processing Unit ») dans l'ordre des tâches dans la liste des tâches prêtes, et calculer le temps d'exécution effectif de chaque tâche. La partie mN-ET du micro-noyau peut également être chargée d'entretenir l'heure courante, utile au système de cadencement par le temporisateur pour le réveil des tâches. Elle peut également activer les contrôles de temps d'exécution effectifs sur le coeur de calcul. Elle peut aussi déclencher l'exécution des tâches sous interruptions d'entrées-sorties. La partie du noyau sur le coeur O peut également horodater leurs résultats pour les mettre à la disposition des tâches applicatives du coeur A.

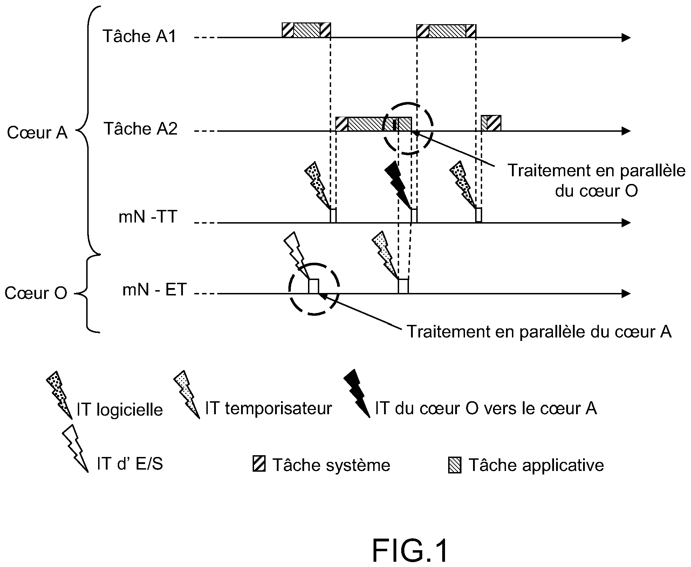

La figure 1 illustre un exemple de répartition selon l'invention des activités d'un micro-noyau (« µNoyau ») sur un coeur O et un coeur A, lors de l'exécution de tâches applicatives A1 et A2 dans l'îlot TT. Comme illustré par la figure 1, l'exécution du micro-noyau peut être déclenchée sur occurrence d'une interruption (« IT ») venant du temporisateur (« IT temporisateur »), ce qui correspond au réveil de la tâche. L'exécution du micro-noyau peut également être déclenchée sur occurrence d'une interruption logicielle (« IT logicielle »). Elle peut enfin être déclenchée sur occurrence d'une interruption liée à une entrée-sortie rapide (« IT d'E/S »). Comme l'exécution du micro-noyau est répartie sur les deux coeurs, les entrées dans le micro-noyau suite à des interruptions du temporisateur et suite à des interruptions d'entrées-sorties peuvent se faire directement sur le coeur O. Comme détaillé par la suite, les entrées dans le micro-noyau suite à des interruptions logicielles se répartissent entre le coeur A où les tâches sont exécutées et le coeur O. Un intérêt majeur de la partition du micro-noyau selon l'invention est qu'elle permet au coeur A d'anticiper l'exécution d'une tâche. En effet, lorsqu'une première tâche a terminé son traitement avant l'occurrence de l'interruption temporisateur, cela signifie que le temps prévu mais non consommé est disponible pour d'autres tâches prêtes dans le respect de leurs paramètres temporels. Cela revient alors à consommer tout le temps de traitement restant qui était affecté à la première tâche en exécutant d'autres tâches prêtes. Cela évite aussi à la fois d'attendre le calcul du nouvel ordonnancement des tâches (effectué par la partie MN-TT sur le coeur O) et d'attendre de manière bloquante que cette opération ait été réalisée. La terminaison de chaque tâche correspondant à un changement d'état requérant un ré-ordonnancement des listes d'exécution, il existe plusieurs façons de coordonner les deux coeurs en vue d'annoncer ce changement d'état. La première méthode consiste à attendre l'occurrence de l'interruption temporisateur revenant alors à traiter tous les changements d'états de toutes les tâches exécutées et terminées. La seconde méthode consiste à avoir une entrée supplémentaire associée dans le micro-noyau mN-ET, déclenchée par une interruption en provenance de la partie mN-TT du micro-noyau. Cela a pour effet d'inhiber la prochaine interruption temporisateur et d'anticiper la mise à jour des listes d'ordonnancement. C'est la première méthode de coordination d'annonce de changement d'état qui a été retenue dans la description détaillée qui suit. Il faut noter que dans le présent exemple de réalisation, une tâche est toujours bien exécutée entre ses deux bornes temporelles et dans le respect de son quota de temps.

Dans le présent exemple de réalisation, la partie mN-ET du micro-noyau s'exécutant de manière asynchrone sur occurrence d'interruptions du temporisateur, une entrée supplémentaire dans la partie mN-TT du micro-noyau sur le coeur A permet avantageusement de signaler un changement dans les listes de tâches à prendre en compte ou un contrôle de quota à effectuer. Le contrôle du temps d'exécution effectif grâce au quota étant alors délégué pour partie au micro-noyau mN-TT, il est alors nécessaire d'avoir une entrée supplémentaire associée dans la partie mN-ET du micro-noyau, déclenchée par une interruption en provenance de la partie mN-TT du micro-noyau, pour lui signaler le résultat du contrôle du temps d'exécution effectif. Dans un autre mode de réalisation, afin d'éviter de gérer des écarts entre les mesures de quota sur le coeur A et sur le coeur O, les interruptions pour contrôle de quota peuvent être complètement gérées par le coeur A.

En suivant les principes énoncés ci-dessus, il y a plusieurs façons de coordonner les deux coeurs relativement aux activités de contrôle du temps d'exécution effectif. Une première méthode consiste à mettre en place un unique aller-retour d'interruption entre les deux coeurs : le temporisateur déclenche un contrôle de quota sur la partie mN-ET du micro-noyau qui à son tour déclenche une interruption vers le coeur A et ensuite une seconde interruption est déclenché par le micro-noyau mN-TT vers le coeur O lorsque le contrôle est réalisé. Cela a l'avantage d'être économe en ressource matérielle, le temporisateur pouvant gérer à la fois le réveil d'une tâche et le contrôle de quota. Une deuxième méthode sans aller-retour peut être définie : le temporisateur cette fois-ci initie le contrôle à l'attention du micro-noyau mN-TT qui, une fois le calcul de quota terminé, déclenche une interruption vers le coeur O pour annoncer un changement d'état. Avec cette méthode, le nombre d'interruptions global est réduit mais peut s'avérer coûteux en temps de commutation, par exemple lorsque des interruptions intermédiaires sont à gérer. C'est la première méthode de coordination du contrôle de quota qui a été retenue dans la description détaillée qui suit.

Dans le présent exemple de réalisation, une variable d'état du micro-noyau appelée natlnt est donc systématiquement positionnée à la sortie de tous traitements de la partie mN-ET du micro-noyau, afin de connaître la nature de la prochaine interruption attendue. Elle est propre au micro-noyau mN-ET. Par exemple, lorsque natlnt vaut 0, cela signifie que l'interruption attendue est celle en provenance du coeur A. Les traitements associés sur le coeur O peuvent avantageusement comprendre la mise à jour de la liste des tâches prêtes, des tâches au repos et des tâches en erreur, ainsi que l'armement de la prochaine interruption du temporisateur. Par exemple, lorsque natlnt vaut 1, cela signifie que l'interruption attendue est une interruption du temporisateur pour le contrôle du temps d'exécution effectif de la tâche activée. Les traitements associés au micro-noyau mN-ET comprennent le déclenchement d'une interruption vers le coeur A pour contrôle effectif. Par exemple, lorsque natlnt vaut 2, cela signifie que l'interruption attendue est une interruption du temporisateur pour le réveil d'une tâche au repos. Les traitements associés au micro-noyau mN-ET peuvent avantageusement comprendre la mise à jour de la liste des tâches prêtes, des tâches au repos et des tâches en erreur, le déclenchement d'une interruption vers le coeur A, ainsi que l'armement de la prochaine interruption du temporisateur.

Dans le présent exemple de réalisation, une variable d'état du micro-noyau appelée natAlert est donc positionnée avant tout déclenchement d'une interruption depuis le coeur O vers le coeur A. Elle est mise à jour par par la partie mN-ET du micro-noyau et est consultée par la partie mN-TT du micro-noyau. Par exemple, lorsque natAlert vaut 0, cela signifie que l'interruption du coeur A correspond à un réveil de tâche. Les traitements associés à la partie mN-TT du micro-noyau comprennent la prise en compte des nouvelles listes. Par exemple, lorsque natAlert vaut 1, cela signifie que l'interruption en provenance du coeur O correspond à un contrôle du temps d'exécution effectif. Avantageusement, les traitements associés sur le coeur A peuvent comprendre le contrôle du temps d'exécution effectif de la tâche activée, puis le positionnement de l'état de la tâche, puis le déclenchement de l'interruption du coeur de calcul vers le coeur O. La figure 1 fait bien apparaître les traitements en parallèle effectués par les coeurs A et O.

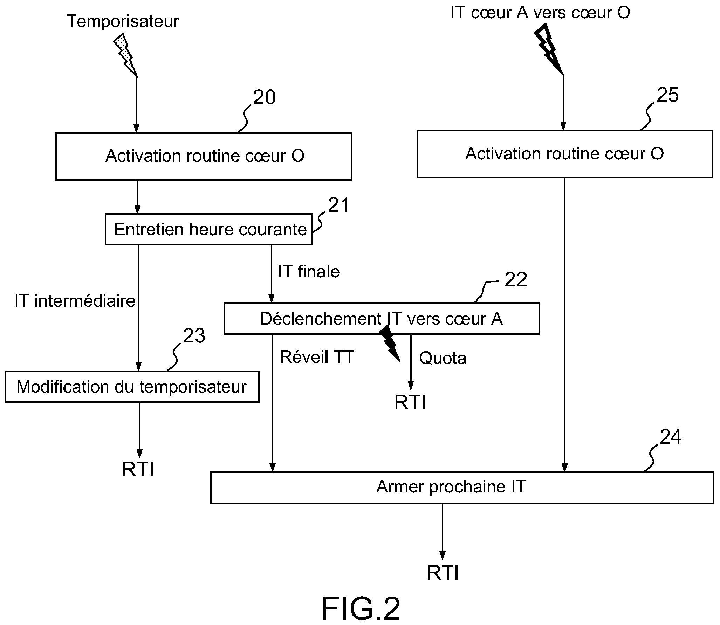

La figure 2 illustre un exemple selon l'invention d'une interruption venant du temporisateur, traitée par le coeur O. Cette interruption peut avantageusement être implémentée par la partie mN-ET du micronoyau, comme illustré par un bloc 20, à chacune des terminaisons de la routine associée. Elle permet donc de surveiller l'évolution temporelle des traitements sur le coeur A, comme illustré par un bloc 21. L'interruption du temporisateur correspond alors soit au réveil par le temporisateur d'une tâche (« réveil TT »), soit au contrôle du respect des contraintes temporelles de la tâche activée, en termes de quota ou d'échéance par exemple.

Les dates de réveil ou les contraintes temporelles, en termes de d'échéance ou de quota, s'expriment comme des dates du système de cadencement par le temporisateur. Elles peuvent être codées sur un certain nombre de bits, par exemple sur 32 bits. Dans le cas où le temporisateur ne permet pas l'expression directe d'une contrainte temporelle, c'est-à-dire lorsque la prochaine interruption à armer, comme illustré par un bloc 24, correspond à une contrainte temporelle dont la valeur est plus grande que la capacité du temporisateur, le micro-noyau peut alors avoir à sa charge la gestion de la transcription des dates du système de cadencement par le temporisateur dans la base de temps du temporisateur. Dans ce cas, la partie mN-ET du micro-noyau gère des interruptions intermédiaires, comme illustré par un bloc 23, pour décompter le temps avant l'occurrence de la dernière interruption, qui correspond à l'interruption finale de la contrainte temporelle considérée. L'interruption finale conduit au traitement de mise à jour de la liste des tâches prêtes et de la liste des tâches au repos, puis au déclenchement d'une interruption sur le coeur A, comme illustré par un bloc 22, afin de lui faire prendre en compte l'événement temporel pour lequel s'est activé le micro-noyau, suivant la valeur de natlnt (1 ou 2).

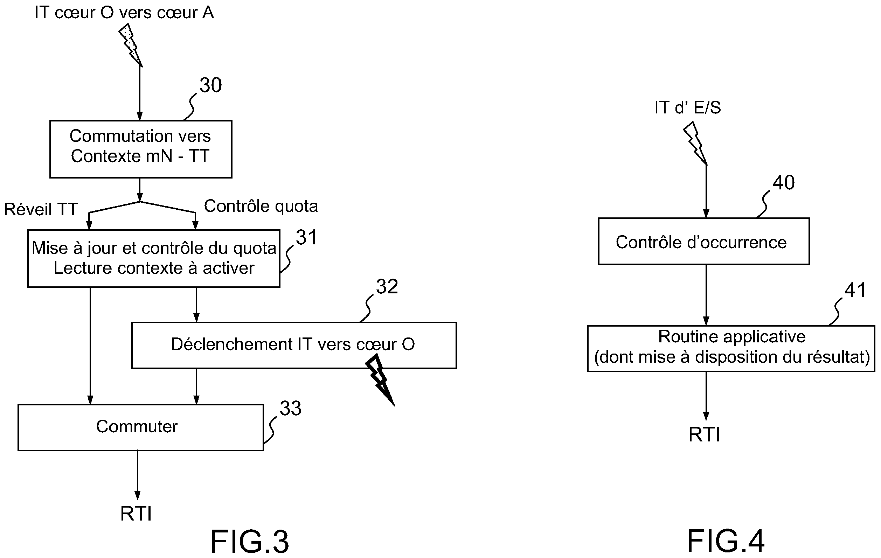

Le micro-noyau mN-ET étant le gestionnaire de l'interruption du temporisateur dans le présent exemple de réalisation, il est alors en charge de l'ordonnancement et du contrôle de l'allocation du coeur A aux tâches. Ainsi, lorsque la liste des contextes prêts est mise à jour ou quand une interruption de contrôle de quota est produite, il interrompt le coeur A à l'aide d'une interruption logicielle et lui indique la nature de son intervention, grâce à natAlert. La partie mN-TT du micro-noyau peut alors avantageusement effectuer la mise à jour et le contrôle du quota de la tâche active, puis éventuellement entreprendre la commutation de contexte en prenant connaissance de la nouvelle tâche prête et en chargeant son contexte d'exécution, comme illustré par un bloc 33 sur la figure 3. Puis, lorsque l'interruption de fin de contrôle de quota est traité par le micro-noyau mN-ET, comme illustré par un bloc 25, la prochaine interruption liée au cadencement est armée (bloc 24). Dans la figure 2 et les suivantes, l'acronyme anglo-saxon « RTI » représente l'instruction de retour d'interruption (« ReTurn from Interrupt »).

Comme illustré par des blocs 30 et 31 dans la figure 3, dans le présent exemple de réalisation, lorsqu'il s'agit d'une demande de contrôle du quota, le micro-noyau mN-ET attend le résultat de l'analyse du quota de la part du micro-noyau mN-TT. Cette attente est non bloquante, le micro-noyau mN-ET poursuivant ses traitements tant que le micro-noyau mN-TT ne lui annonce alors la fin de ce traitement en déclenchant à son tour une interruption à son attention, comme illustré par un bloc 32. A partir de là, comme illustré dans la figure 2 par le bloc 25 et le bloc 24, la partie mN-ET du micro-noyau peut alors activer à nouveau la prochaine interruption du temporisateur. Que ce soit pour un contrôle de quota ou un réveil par le temporisateur (changement dans les listes de tâches prêtes, au repos ou en erreur), la partie mN-TT du micro-noyau prend connaissance de la nouvelle tâche prête et charge son contexte d'exécution (bloc 33).

Comme illustré par la figure 4, le micro-noyau mN-ET peut avantageusement implémenter le gestionnaire des interruptions d'entrées/sorties. Il peut alors avoir en charge l'activation d'une routine associée à l'interruption d'entrées/sorties. Cette routine peut comporter une partie initiale générique de contrôle d'occurrence de l'interruption, comme illustré par un bloc 40, et une partie de traitement applicatif spécifique incluant la possibilité de signaler que le résultat qui a été élaboré et qui est lié à cette entrée/sortie peut être mis par le noyau à disposition des tâches sur le coeur A, comme illustré par un bloc 41. Par exemple, il peut avantageusement être mis dans une zone mémoire partagée entre les deux coeurs par exemple, qui peuvent également partager un jeu d'interruptions spécifiques pour interagir. La stratégie de contrôle d'occurrence d'interruption dépend du domaine industriel visé et du type de surveillance à mettre en place. Cette stratégie peut par exemple exploiter un nombre maximum autorisé d'interruptions d'entrées/sorties ou un temps minimum ou maximum autorisé entre deux interruptions d'entrées/sorties. En cas de non respect de l'un de ces critères, le contrôle doit aussi préciser la stratégie de gestion de « défaillance » associée. Cette stratégie peut elle aussi être de différentes natures, pouvant aller de la remise à zéro du module de gestion de cette entrée/sortie jusqu'à l'inhibition temporaire ou définitive de son fonctionnement. La mise à disposition par le noyau des données élaborées se fait dans le traitement applicatif par l'appel à une fonction système de la partie MN-ET. Cette fonction a pour rôle de dater le résultat et d'associer à cet ensemble un indice signalant sa position dans un tampon à disposition du noyau du côté du coeur A. Le tampon est dimensionné en fonction des occurrences d'interruptions d'entrées/sorties attendues et de l'exploitation de ces données par la tâche temps-réel applicative associée. Il est à noter que la datation du résultat élaboré par le noyau doit être atomique par rapport à l'entretien de l'heure courante par l'intermédiaire de l'interruption du temporisateur.

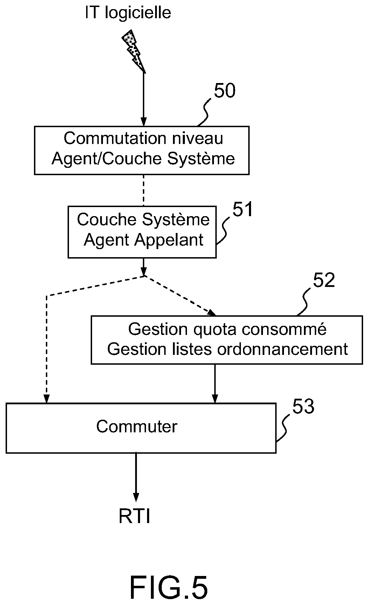

Comme illustré par la figure 5, une interruption logicielle en provenance d'une tâche est déclenchée pour signaler un appel système, par exemple l'arrivée à destination d'un noeud du graphe d'exécution. Dans le présent exemple de réalisation, le micro-noyau mN-TT peut alors opérer les modifications de contexte d'exécution, comme illustré par un bloc 50, pour permettre l'exécution de la couche système de la tâche appelante, comme illustré par un bloc 51. Au cours de son traitement, la couche système peut être amenée à modifier les contraintes temporelles de la tâche en conformité avec son graphe d'exécution. Cette opération amène alors la couche système à entreprendre une gestion du quota consommé, comme illustré par un bloc 52, puis peut amener, si nécessaire, le micro-noyau mN-TT à effectuer une commutation de tâches sur le coeur A, comme illustré par un bloc 53. Une fonction peut positionner une variable d'état dans la zone de communication ainsi qu'un indicateur associé à l'entrée d'origine, puis transfèrer les arguments et les dates de prise et de libération du coeur de calcul dans le contexte de la tâche qui était en cours d'exécution. Ensuite, il peut y avoir appel au module de commutation pour activer la tâche prête suivante. L'évaluation du quota de CPU consommé est faite par calcul de la différence entre l'heure à laquelle la tâche abandonne le CPU, ou l'heure à laquelle on le lui retire, et l'heure à laquelle il lui a été donné. Le calcul est fait par le micro-noyau mN-ET à partir des informations fournies par la partie mN-TT du micro-noyau. En effet, lors de la préemption d'une tâche n'entrainant pas de changement d'état de ladite tâche, qui reste donc activable, l'information de quota consommé associée et contenue dans le contexte de la tâche peut avantageusement être mise à jour par le coeur de calcul.

Afin de se synchroniser, les deux parties du micro-noyau partagent des données comme celles définies par exemple dans le tableau 1 qui suit. Cependant, il n'y a qu'un seul écrivain pour une donnée.

**Tableau 1: exemple de données de synchronisation selon l'invention**

| Données | Ecrivain | |
|---|---|---|
| natAlert | micro-noyau mN-ET | Nature de l'interruption entrante sur le coeur A : |
| | | 0 => réveil tâche ; |
| | | 1 => contrôle quota. |
| contexPret | micro-novau mN-ET | Liste des tâches prêtes |
| contexDerout | micro-novau mN-ET | Liste des tâches en erreur |
| contexRepos | micro-novau mN-ET | Liste des tâches au repos |
| heureCompt0 | micro-noyau mN-ET | Valeur de l'heure courante du temporisateur (quand le compteur du temporisateur associé passe par 0) |

La structure des contextes d'exécution des tâches dispose de champs comme ceux définis à titre d'exemple dans le tableau 2 qui suit. Le contenu de ces champs est mis a jour par un seul écrivain, qui peut être soit le micro-noyau mN-ET, soit par le micro-noyau mN-TT. Il faut noter que, dans le présent exemple de réalisation, le micro-noyau mN-TT met avantageusement à jour une variable « etat » qui indique notamment si une tâche prête activable passe au repos ou en erreur. La partie mN-ET du micro-noyau est la seule à pouvoir la faire revenir à l'état activable lors de la mise à jour des listes de tâches.

**Tableau 2: exemple de structure de contexte selon l'invention**

| Champ | Ecrivain | Description |
|---|---|---|
| suiv | Micro-noyau mN-ET | Pour gestion de la liste des contextes |
| ag | Donnée constante statique | Pointeur sur le descripteur statique de la tâche |
| datPret | Micro-noyau mN-ET | Date d'activation effective |
| datFin | Micro-noyau mN-ET | Date d'inactivation effective |
| quota | Micro-noyau mN-ET | Quota effectif pour la tâche applicative en cours |
| datPretS | Micro-noyau mN-TT | Nouvelle date d'activation au |
| | | plus tôt |
| datFinS | Micro-noyau mN-TT | Nouvelle date de fin au plus tard |
| quotaS | Micro-noyau mN-TT | Nouvelle valeur du quota pour la tâche applicative |
| quotaM | Micro-noyau mN-TT | Nouvelle valeur du quota devant rester a l'issue du traitement de la tâche applicative |
| datOcc | Micro-noyau mN-TT | Date de début d'occupation du CPU |
| datLib | Micro-noyau mN-TT | Date de libération du CPU |
| etat | Micro-noyau mN-TT et Micro-noyau mN-ET | État de la tâche : |
| | | PRETREPOS : tâche au repos, repositionner la fenêtre d'exécution ; |
| | | DATETARD : repousser la date limite ; |
| | | DEROUT : tâche en erreur ; |
| | | ACTIVABLE : tâche prête, pouvant être exécutée. |

Dans le présent exemple de réalisation, la liste contexPret est accédée en lecture par le micro-noyau mN-TT et entretenue par le micro-noyau mN-ET" c'est-à-dire accédée en lecture et en écriture. Notamment, le micro-noyau mN-TT lit la liste contexPret :
- après une interruption venant du coeur O pour contrôle du quota ou un réveil. Pour un contrôle de quota, la tête de liste contexPret est comparée à la tâche en cours d'exécution pour déterminer si on est face à un dépassement de quota ou non. Pour un réveil, la tête de la liste contexPret est accédée pour en faire la nouvelle tâche à exécuter;
- sur l'entrée système par l'intermédiaire d'une interruption logicielle depuis la couche système, pour modifier les contraintes temporelles. Seul le pointeur suivant de la tâche en cours d'exécution est alors lu pour la suite de l'exécution.

Du côté du micro-noyau mN-ET, l'insertion d'un contexte C entre deux contextes B et D se fait en modifiant d'abord le suivant de C (qui sera égal à D), puis en modifiant le suivant de B (qui sera égal à C).

Dans le présent exemple de réalisation, l'extraction des contextes peut être effectuée en considérant les contextes qui ne sont plus activables. Le contrôle s'opère donc de contexPret à la première tâche activable (cette dernière étant exclue). Les extractions sont invisibles pour le coeur A, car si le contexte n'est plus activable, cela signifie que le coeur A les a déjà exécutés, donc la tâche en cours d'exécution sur le coeur A est égale à la première tâche activable ou à un de ses suivants. Il n'y reviendra donc plus.

Concernant la gestion de l'état DATETARD, il faut remarquer que cette opération a pour objectif de repousser la date limite d'un contexte lors son exécution. Lorsque ce report de date limite a lieu, micro-noyau mN-TT passe au suivant de ce contexte. Or, si la date limite est toujours en amont du suivant malgré ce report, la tâche ne sera pas ré-exécutable jusqu'à la prochaine interruption en provenance du coeur O avec natAlert valant 0.

Pour la mise à disposition du résultat des routines applicatives de gestion des interruptions d'entrées/sorties sur le coeur O, comme expliqué précédemment, un tampon est mis à disposition en lecture de la couche système d'une tâche de calcul. L'indiçage dans ce tableau permet à la couche système côté coeur A de maintenir et d'identifier les résultats d'entrées/sorties rapatriés ou non par la tâche.

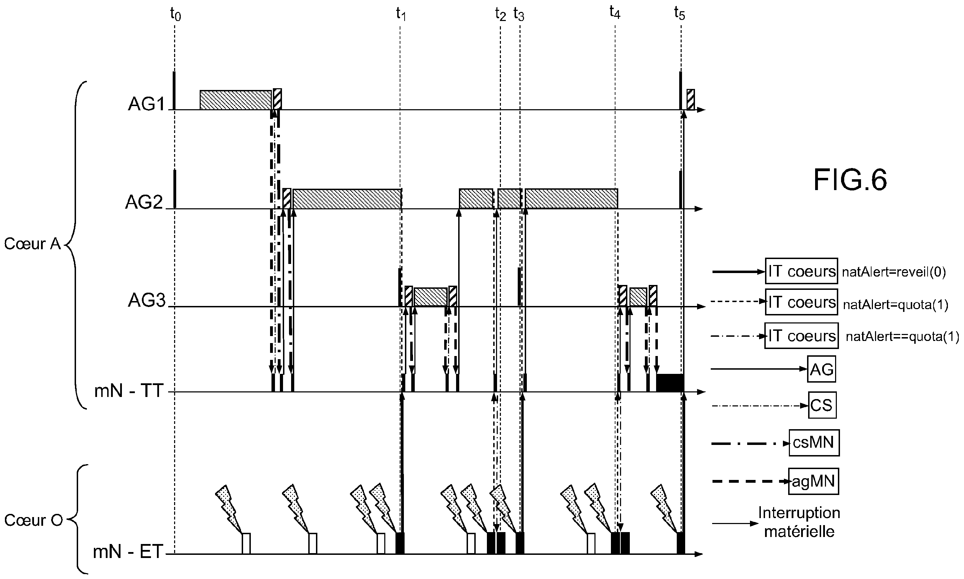

La figure 6 illustre un exemple de scénario de fonctionnement selon l'invention de deux coeurs en parallèle, l'acronyme CS signifiant « couche système », l'acronyme agMN signifiant « passage du mode tâche applicative (agent - ag) à micro-noyau (MN) et l'acronyme csMN signifiant « passage du mode tâche système (couche système - cs) à micro-noyau (MN) ».
A un instant t₀ :
   - des tâches AG1 et AG2 sont dans la liste des tâches prêtes ;
   - la tâche AG1 est celle qui est en cours d'exécution et son quota va au-delà d'un instant t₁ ;
   - la prochaine interruption finale est pour l'instant t₁, date de réveil par le temporisateur d'une tâche AG3 ;
   - la tâche AG3 est dans la liste des tâches au repos.
Entre l'instant t₀ et l'instant t₁ :
   - il y a trois interruptions intermédiaires sur le O ;
   - la tâche AG1 termine son activité élémentaire avant que son quota ne soit atteint. Le micro-noyau mN-TT commute et exécute la tâche AG2 avec le quota de la tâche AG1.
A l'instant t₁ :
   - l'interruption par le temporisateur arrive pour le réveil de la tâche AG3 ;
   - le micro-noyau mN-ET place la tâche AG1 dans la liste des tâches au repos, place la tâche AG3 en tête de la liste des tâches prêtes, arme le temporisateur avec le quota de la tâche AG3 qui correspond à un instant t₂, positionne natAlert à 0 et notifie par une interruption vers le micro-noyau mN-TT des nouvelles listes de tâches à prendre en compte. Le micro-noyau mN-TT effectue alors le contrôle de quota concernant la tâche AG2 puis donne la main à la tâche AG3.
Entre l'instant t₁ et l'instant t₂ :
   - il y a une interruption intermédiaire sur le O ;
   - la tâche AG3 termine son activité élémentaire avant que son quota ne soit atteint. Le micro-noyau mN-TT commute puis continue d'exécuter la tâche AG2 avec le quota de la tâche AG3.
A l'instant t₂ :
   - l'interruption par le temporisateur arrive pour le contrôle de quota de la tâche AG3 ;
   - le micro-noyau mN-ET positionne natAlert à 1, notifie par une interruption vers le micro-noyau mN-TT les contrôles de quota à effectuer ;
   - le coeur A passe en mode micro-noyau à réception de l'interruption du micro-noyau mN-ET et modifie le contenu du contexte de la tâche en cours d'exécution pour contrôle de quota (la tâche AG3 avait terminé son activité), notifie par une interruption vers le micro-noyau mN-ET les mises à jour puis redonne la main à la seule tâche prête et activable, la tâche AG2 ;
   - le micro-noyau mN-ET place la tâche AG3 dans la liste des tâches au repos et arme le temporisateur pour le réveil de la tâche AG3 (plus proche que l'épuisement du quota restant à AG2) à un instant t₃.
A l'instant t₃ :
   - l'interruption du temporisateur arrive pour le réveil de la tâche AG3 ;
   - le micro-noyau mN-ET place la tâche AG3 dans la liste des tâches prêtes (après la tâche AG2), arme le temporisateur avec le quota restant autorisé de la tâche AG2 qui correspond à un instant t₄, positionne natAlert à 0 et notifie par une interruption vers le micro-noyau mN-TT les nouvelles listes de tâches à prendre en compte. Le micro-noyau mN-TT effectue alors le contrôle de quota concernant la tâche AG2 puis donne la main à la tâche AG3
Entre l'instant t₃ et l'instant t₄ :
   - il y a une interruption intermédiaire sur le coeur O.
A l'instant t₄ :
   - l'interrution du temporisateur arrive pour le contrôle de quota de la tâche AG2 ;
   - le micro-noyau mN-ET positionne natAlert à 1, notifie par une interruption vers le micro-noyau mN-TT les contrôles de quota à effectuer ;
   - le coeur A passe en mode micro-noyau à réception de l'interruption du coeur O et modifie le contenu du contexte de la tâche en cours d'exécution (la tâche AG2 a dépassé son quota), notifie par une interruption vers le micro-noyau mN-ET les mises à jour puis donne la main à la seule tâche prête et activable, la tâche AG3 ;
   - le micro-noyau mN-ET place la tâche AG2 dans la liste des tâches en erreur et arme le temporisateur pour le réveil de la tâche AG1 (plus proche que l'épuisement du quota restant à AG3) à un instant t₅.
Entre l'instant t₄ et l'instant t₅ :
   - la tâche AG3 termine son activité élémentaire avant que son quota ne soit atteint. Le micro-noyau du coeur A passe en mode oisif.
A l'instant t₅ :
   - l'interruption du temporisateur arrive pour le réveil de la tâche AG1 ;
   - le micro-noyau mN-ET place la tâche AG3 dans la liste des tâches au repos et la tâche AG1 dans la liste des tâches prêtes, arme le temporisateur avec le quota de la tâche AG1, positionne natAlert à 0 et notifie par une interruption vers le micro-noyau mN-TT les nouvelles listes de tâches à prendre en compte.

En déportant sur un coeur dédié au contrôle un sous ensemble de fonctions du noyau que sont l'ordonnancement des tâches, la gestion du temps et la gestion des entrées-sorties sous interruption, l'invention décrite précédemment permet d'exploiter pleinement et de tirer au mieux parti du parallélisme effectif d'une architecture matérielle multi-coeur. La répartition asymétrique des fonctions du micro-noyau en deux parties MN-TT et MN-ET proposée par l'invention permet également de sécuriser l'exécution temps-réel de tâches de calcul cadencées par le temps ainsi que l'exécution des routines sous interruption d'entrées-sorties. En effet, la répartition asymétrique des fonctions du micro-noyau proposée par l'invention assure une séparation spatiale et temporelle entre l'îlot ET exécuté sur le coeur O et le ou les îlots TT exécutés sur un coeur A. Ainsi, la gestion des traitements sous interruption n'est pas imputée au coeur A, notamment les traitements d'entrées-sorties, ne perturbant en aucun cas les performances atteignables par les tâches de calcul et réciproquement. Du point de vue de la mémoire, les placements mémoire et éventuellement les protections mémoires empêchent le coeur O d'accéder aux zones mémoires des tâches de calculs. Les contrôles d'occurrence d'interruptions d'entrées-sorties sur le coeur O et les contrôles de temps d'exécution effectifs sur le ou les coeurs de calcul permettent de surveiller les interruptions et de détecter d'éventuelles anomalies de comportement temporel.

L'invention décrite précédemment a encore pour principaux avantages qu'il permet l'exécution performante, maîtrisée et sécurisée d'un système complet temps-réel embarqué, pour des applications dans le domaine de l'automobile par exemple. En effet, l'invention permet de tirer au mieux parti des architectures matérielles embarquées, autorisant un très haut degré d'intégration en terme de nombres de tâches ou de fonctionnalités par processeur. Le procédé d'exécution multitâche associé intégrant la coordination des coeurs, l'invention permet également d'exécuter de manière transparente au développeur sur des architectures multi-coeurs une application comportant un ensemble de tâches et de routines sous interruption d'entrées-sorties. Le développeur n'a en effet plus à se soucier de la localisation des tâches ou des routines grâce aux interfaces et aux éléments partagés dans le noyau qui ont été définies pour gérer son partitionnement asymétrique sur les coeurs.

## Revendications

1. Système de traitement de l'information comportant deux coeurs de traitement, l'exécution d'une application par le système incluant l'exécution de tâches applicatives et l'exécution de tâches systèmes, le système comportant un micro-noyau exécutant les tâches systèmes qui sont en liaison directe avec des ressources matérielles, le système de traitement comportant :
- une partie calcul mN-TT du micro-noyau sur un premier coeur A exécutant des tâches systèmes relatives à la commutation des tâches sur le coeur A, incluant la mise à jour pour chaque tâche d'un état indiquant si ladite tâche est exécutable ou pas, ledit état étant inclus dans un contexte d'exécution associé à ladite tâche et regroupant des données d'exécution de ladite tâche, ledit état pouvant prendre:
∘ une valeur indiquant que la tâche est prête ;
∘ une valeur indiquant que la tâche est au repos ;
∘ une valeur indiquant que la tâche est en erreur ;
- une partie contrôle mN-ET du micro-noyau sur un deuxième coeur O exécutant des tâches applicatives déclenchées par des interruptions d'entrées/sorties et exécutant des tâches systèmes relatives au contrôle de l'ordre d'allocation des tâches au coeur A, lesdites tâches systèmes incluant la gestion:
∘ d'une liste ordonnée des tâches prêtes, et/ou ;
∘ d'une liste ordonnée des tâches au repos, et/ou ;
∘ d'une liste des tâches en erreur ;
**caractérisé en ce que** la partie de contrôle mN-ET et la partie de calcul mN-TT du micro-noyau partagent lesdites listes de tâches ordonnées, l'ordre des listes étant maintenue par la partie de contrôle mN-ET et le contenu de chaque élément des listes étant maintenu par la partie mN-TT,
et **en ce que** les tâches systèmes exécutées par le coeur A relatives à la commutation des tâches incluent la mise à jour dans le contexte d'exécution de chaque tâche :
- d'une date limite de début d'exécution au plus tôt et/ou d'une date limite de fin d'exécution au plus tard ;
- d'un quota de temps d'exécution restant ;
le coeur O ordonnant les tâches dans la liste des tâches prêtes selon un ordre qui permet d'exécuter chaque tâche en fonction des dates limites d'exécution de chaque tâche et du quota de temps d'exécution de chaque tâche.

2. Système selon la revendication 1, **caractérisé en ce que** les tâches systèmes exécutées par la partie mN-TT du micro-noyau relatives à la commutation des tâches incluent, sur réception d'une interruption par le coeur A :
- le chargement du contexte d'exécution d'une tâche parmi les tâches prêtes ;
- le déclenchement de l'exécution de ladite tâche.

3. Système selon la revendication 2, **caractérisé en ce que**, sur réception d'une interruption, la partie mN-TT du micro-noyau charge le contexte d'exécution de la première tâche dans la liste des tâches prêtes.

4. Système selon la revendication 2, **caractérisé en ce que** l'interruption est générée par un temporisateur implémenté par la partie mN-ET du micro-noyau.

5. Système selon la revendication 4, **caractérisé en ce que** le temporisateur est cadencé par une horloge à quartz, de manière à déclencher l'exécution par la partie mN-TT du micro-noyau de tâches applicatives temps-réel.

6. Système selon la revendication 1, **caractérisé en ce que** chaque coeur exécute les tâches systèmes relatives aux communications entre les tâches qui leurs sont propres.

7. Système selon la revendication 1, **caractérisé en ce qu'**il comporte un espace mémoire partagé et un jeu d'interruptions pour que les coeurs inter-agissent.

8. Système selon la revendication 1, **caractérisé en ce que** les coeurs sont des processeurs de types différents.

9. Système selon la revendication 8, **caractérisé en ce que** les processeurs sont implantés sur une puce.

## Patentansprüche

1. Informationsverarbeitungssystem, das zwei Verarbeitungskerne aufweist, wobei die Ausführung einer Anwendung durch das System die Ausführung von Anwendungstasks und die Ausführung von Systemtasks einschließt, wobei das System einen Mikrokernel aufweist, der die Systemtasks ausführt, die direkt mit Hardware-Ressourcen verknüpft sind, wobei das Verarbeitungssystem aufweist:
- einen mN-TT-Berechnungsanteil des Mikrokernels auf einem ersten Kern A, der Systemtasks im Zusammenhang mit der Taskumschaltung auf Kern A ausführt, einschließend die Aktualisierung eines Zustands für jeden Task, der angibt, ob der Task ausführbar ist oder nicht, wobei der Zustand in einem mit dem Task verbundenen Ausführungskontext enthalten ist und Ausführungsdaten des Tasks zusammenfasst, wobei der Zustand:
∘ einen Wert, der angibt, dass der Task bereit ist;
∘ einen Wert, der angibt, dass der Task im Ruhezustand ist;
∘ einen Wert, der angibt, dass der Task fehlerhaft ist,
annehmen kann;
- einen mN-ET-Steuerteil des Mikrokernels auf einem zweiten Kern O, der durch Eingangs-/Ausgangs-Unterbrechungen ausgelöste Anwendungstasks ausführt und Systemtasks im Zusammenhang mit der Reihenfolgensteuerung der Zuweisung von Tasks zu dem Kern A ausführt, wobei die Systemtasks die Verwaltung:
∘ einer geordneten Liste der fertigen Tasks, und/oder;
∘ einer geordneten Liste der Tasks im Ruhezustand, und/oder;
∘ einer Liste der fehlerhaften Tasks
einschließen;
**dadurch gekennzeichnet, dass** der mN-ET-Steuerteil und der mN-TT-Steuerteil des Mikrokernels die Listen der geordneten Tasks miteinander teilen, wobei die Listenreihenfolge durch den mN-ET-Steuerteil aufrechterhalten wird und wobei der Inhalt jedes Listenelements durch den mN-TT-Teil aufrechterhalten wird,
und dass die durch den Kern A im Zusammenhang mit der Taskumschaltung ausgeführten Systemtasks die Aktualisierung in dem Ausführungskontext von jedem Task
- einen Endtermin des frühesten Ausführungsbeginns und/oder einen Endtermin des spätesten Ausführungsendes;
- einen verbleibenden Ausführungszeitanteil
einschließen:
wobei der Kern O die Tasks in der Liste der fertigen Tasks gemäß einer Reihenfolge anordnet, die jeden Task in Abhängigkeit des Ausführungsendtermins jedes Tasks und des Ausführungszeitanteils für jeden Task auszuführen erlaubt.

2. System nach Anspruch 1, **dadurch gekennzeichnet, dass** die durch den mN-TT-Teil des Mikrokernels im Zusammenhang mit der Taskumschaltung ausgeführten Systemtasks bei Empfang einer Unterbrechung durch den Kern A:
- das Laden des Ausführungskontextes eines Tasks aus den fertigen Tasks;
- das Auslösen der Ausführung des Tasks
einschließen.

3. System nach Anspruch 2, **dadurch gekennzeichnet, dass** bei Empfang einer Unterbrechung der mN-TT-Teil des Mikrokernels den Ausführungskontext des ersten Tasks in die Liste der fertigen Tasks lädt.

4. System nach Anspruch 2, **dadurch gekennzeichnet, dass** die Unterbrechung durch einen durch den mN-ET-Teil des Mikrokernels umgesetzten Zeitgeber erzeugt wird.

5. System nach Anspruch 4, **dadurch gekennzeichnet, dass** der Zeitgeber durch eine Quarzuhr getaktet wird, um die Ausführung von Echtzeit-Anwendungstasks durch den mN-TT-Teil des Mikrokernels auszulösen.

6. System nach Anspruch 1, **dadurch gekennzeichnet, dass** jeder Kern die Systemtasks im Zusammenhang mit den Kommunikationen zwischen seinen eigenen Tasks ausführt.

7. System nach Anspruch 1, **dadurch gekennzeichnet, dass** es einen gemeinsamen Speicherbereich und eine Reihe von Unterbrechungen aufweist, damit die Kerne miteinander agieren.

8. System nach Anspruch 1, **dadurch gekennzeichnet, dass** die Kerne Prozessoren unterschiedlichen Typs sind.

9. System nach Anspruch 8, **dadurch gekennzeichnet, dass** die Prozessoren auf einem Chip implantiert sind.

## Claims

1. An information processing system comprising two processing cores, the execution of an application by the system including the execution of application tasks and the execution of system tasks, the system comprising a micro-kernel executing the system tasks which are directly linked to hardware resources, the processing system comprising:
- an mN-TT computation part of the micro-kernel on a first core A executing system tasks relating to the switching of the tasks on the core A, including, for each task, the updating of a state indicating whether said task is executable or not, said state being included in an execution context associated with said task and gathering execution data of said task, said state being able to take:
∘ a value indicating that the task is ready;
∘ a value indicating that the task is idle;
∘ a value indicating that the task is errored;
- an mN-ET control part of the micro-kernel on a second core O executing application tasks triggered by input/output interrupts and executing system tasks relating to the control of the task allocation order on the core A, said system tasks including the management:
∘ of an ordered list of the tasks that are ready, and/or;
∘ of an ordered list of the tasks that are idle, and/or;
∘ of a list of tasks that are errored;
**characterized in that** the mN-ET control part and the mN-TT computation part of the micro-kernel share said ordered lists of tasks, the order of the lists being maintained by the mN-ET control part and the content of each element of the lists being maintained by the mN-TT part,
and **in that** the system tasks executed by the core A relating to the switching of the tasks include the updating within the context of executing each task:
- of a limit date for the earliest start of execution and/or of a limit date for the latest end of execution;
- of a remaining execution time quota;
the core O ordering the tasks in the list of the tasks that are ready according to an order which makes it possible to execute each task according to the limit dates for the execution of each task and for the execution time quota of each task.

2. The system according to Claim 1, **characterised in that** the system tasks executed by the mN-TT part of the micro-kernel relating to the switching of the tasks include, on reception of an interrupt by the core A:
- the loading of the execution context of one task among the tasks that are ready;
- the triggering of the execution of said task.

3. The system according to Claim 2, **characterized in that**, on reception of an interrupt, the mN-TT part of the micro-kernel loads the execution context of the first task in the list of tasks that are ready.

4. The system according to Claim 2, **characterized in that** the interrupt is generated by a timer implemented by the mN-ET part of the micro-kernel.

5. The system according to Claim 4, **characterized in that** the timer is paced by a quartz crystal clock such as to trigger execution of real-time application tasks by the mN-TT part of the micro-kernel.

6. The system according to Claim 1, **characterized in that** each core executes the system tasks relating to communications between the tasks that are specific to each core.

7. The system according to Claim 1, **characterized in that** it comprises a shared memory space and a set of interrupts so that the cores interact.

8. The system according to Claim 1, **characterized in that** the cores are processors of different types.

9. The system according to Claim 8, **characterized in that** the processors are implemented on a chip.
